# EUROPÄISCHE PATENTSCHRIFT

(11) **EP 1 324 842 B1**
(45) Veröffentlichungstag und Bekanntmachung des Hinweises auf die Patenterteilung: **19.12.2007**
(21) Anmeldenummer: 00978949.6
(22) Anmeldetag: 25.09.2000
(51) Int. Cl.: B22C 9/00, B22C 9/10

(54) **VERFAHREN ZUM HERSTELLEN EINES BAUTEILS IN ABLAGERUNGSTECHNIK**
METHOD FOR PRODUCING A PART USING A DEPOSITION TECHNIQUE
PROCEDE POUR LA PRODUCTION D'UN ELEMENT PAR LA TECHNIQUE DU DEPOT

(43) Veröffentlichungstag der Anmeldung: 09.07.2003
(73) Patentinhaber: VoxelJet Technology GmbH, 86167 Augsburg (DE)
(72) Erfinder: EDERER, Ingo, 86926 Pflaumdorf (DE); HÖCHSMANN, Rainer, 86682 Genderkingen (DE)
(74) Vertreter: Viering, Jentschura & Partner
(86) Internationale Anmeldenummer: PCT/DE2000/003324
(87) Internationale Veröffentlichungsnummer: WO 2002/026419

(56) Entgegenhaltungen:
- EP-B- 0 431 924

## Beschreibung

Die Erfindung betrifft ein Verfahren zum Herstellen eines Bauteils in schichtweiser Ablagerungstechnik durch Aufbauen eines das Rohbauteil enthaltenden Schichtenverbunds aus einem Partikelmaterial. Das hergestellte Bauteil ist insbesondere eine Gießform oder ein Gießkern. Das Verfahren eignet sich aber auch zur Herstellung eines Metallbauteils aus einem körnigen Metallmaterial wie z.B. einem Metallpulver oder einem körnigen oder granulatförmigen Kunststoffmaterial.

Bei einem herkömmlichen Herstellungsverfahren für Formen und/oder Kerne für den Metallguss wird eine Mischung aus einem Sand und einem aushärtbaren Bindemittel in Kästen abgefüllt. Ein Positivmodell des im Metallguss zu fertigenden Gußstückes wird in die Sand-Binder-Mischung vor deren Härtung eingebettet und wieder entfernt. Dadurch entsteht in der Sand-Binder-Mischung ein Abdruck, der eine Negativform des Gußstückes darstellt. Die geformte Sand-Binder-Mischung wird ausgehärtet, so daß eine ausreichend widerstandsfähige Gießform in Form der Negativform entsteht.

Bei einer anderen Variante zur Herstellung von Gießformen kann alternativ zu einer Mischung aus Sand und Bindemittel auch sogenannter Croning-Sand, ein pulverförmiges Material aus einem mit einem Kunstharz vorbeschichteten Gießsand, wie zum Beispiel Quarz- oder Zirkonsand, verwendet werden.

Das Binden des Pulvermaterials erfolgt durch Aufschmelzen des trockenen Bindemittels mittels Wärmezufuhr. Der Energieaufwand für die Herstellung von Gießkernen und Gießformen ist dabei nicht unerheblich. Zudem werden zur Durchführung des Verfahrens relativ komplexe Maschinen benötigt.

Vorteilhaft im Hinblick auf Energieeinsparung bei der Formenherstellung sind die sogenannten kalthärtenden Verfahren (Cold-Box). Hierbei wird das Bindemittel chemisch ausgehärtet. Dies erfolgt entweder durch Zumischen eines kalthärtenden ZweiKomponenten-Binders in den Formsand, der anschließend noch für eine begrenzte Zeitspanne verarbeitbar ist, bevor er aushärtet, oder die geformte Sand-Binder-Mischung wird mit einem das Bindemittel aushärtenden Gas durchflutet. Letzteres Verfahren wird Gashärteverfahren genannt.

Das Positivmodell wird bei den oben beschriebenen Verfahren nach herkömmlichen Modellbauverfahren wie NC-Fräsen oder NC-Drehen gefertigt, was insbesondere mit zunehmender Komplexität des gewünschten Metallteils zeitaufwendig und teuer ist.

Mittels Ablagerungstechnik, auch Rapid-Prototyping Verfahren genannt, wobei das formbildende Material schichtweise aufgetragen wird, können Gießformen, Modelle oder andere Bauteile schneller und kostengünstiger hergestellt werden.

Ein bekanntes Verfahren, bei dem ein Bauteil schichtweise aufgebaut wird, ist in der US 5,182,170 (Marcus et al.) offenbart. Bei diesem Verfahren wird eine Schicht aus mit einem Bindemittel versetztem Pulver auf eine Unterlage aufgetragen. Die Schicht wird der Atmosphäre eines reaktiven Gases ausgesetzt, wodurch das Bindemittel aktiviert wird. In dieser aktivierenden Atmosphäre wird einem vorbestimmten Teilbereich der Schicht lokal Wärme zugeführt. Dadurch wirken das reaktive Gas und die zugeführte Wärme lokal zusammen auf das Bindemittel ein, wodurch es zu einer lokalen chemischen Reaktion des Bindemittels kommt und die Schicht in dem vorbestimmten Teilbereich verfestigt wird. Als Wärmequelle dient zum Beispiel ein Laser. Das Auftragen des Pulvers und die anschließende Aktivierung und Verfestigung werden Schicht für Schicht durchgeführt, bis das Bauteil fertiggestellt ist.

Eine weiteres Verfahren der Ablagerungstechnik ist aus US 5,204,055 und EP-0 431 924 B1 (Sachs et al.) bekannt. Bei diesem Verfahren wird eine Schicht aus einem pulverförmigen Baumaterial (z.B. Keramik oder Metall) abgelagert. Durch selektives Einbringen eines selbstaushärtenden Bindemittels in einen vorbestimmten Teilbereich jeder Schicht wird die Baumaterialschicht in einem ausgewählten Bereich gebunden und mit der zuvor gefertigten Schicht verbunden, bevor die nächstfolgende Schicht abgelagert wird. Dieser Vorgang wird schichtweise wiederholt, so daß ein Schichtenverbund hergestellt wird, in dem das herzustellende Bauteil in einer Umgebung aus Partikelmaterial, das nicht mit Bindemittel benetzt worden ist und infolgedessen ungebunden ist, enthalten ist. Das Bindemittel kann mittels eines aus der Drucktechnik bekannten Drop-On-Demand Dosierkopfes (wie z.B. eines Tintenstrahl-Druckerkopfes) tröpfchenweise und nach einem vorbestimmten Programm gesteuert aufgebracht werden. Der vorbestimmte Teilbereich jeder Schicht wird thermisch, z.B. durch Wärmestrahlung, oder durch chemische Reaktion des Bindemittels vor dem Ablagern der nächstfolgenden Schicht wenigstens teilweise verfestigt. Zur vollständigen Verfestigung der das Bauteil bildenden Teilbereiche kann eine Nachbehandlung nach dem Aufbauen des Schichtenverbundes durch Zuführen von Wärmeenergie erfolgen.

Ein Problem bei dem Verfahren gemäß EP-0 431 924 B1 (Sachs) beruht auf der selbsttätigen Aushärtung des Bindemittels. Dadurch kann der Zusammenhalt aufeinanderfolgender Schichten untereinander gefährdet sein. Zudem tendiert bei Verwendung eines Drop-On-Demand-Druckkopfes der Binder dazu, auch am Druckkopf auszuhärten und so den Druckkopf zu verstopfen, wodurch ein häufiges Reinigen des Druckkopfes erforderlich wird.

Die DE 198 53 834.0 (Höchsmann et al.) stellt ein Rapid-Prototyping-Verfahren vor, bei dem eine Schicht aus einem Partikelmaterial abgelagert wird und auf die Schicht vollflächig ein Bindemittel aufgetragen wird. Anschließend und noch vor Ablagerung der nächstfolgenden Schicht wird auf ausgewählte Teilbereiche der mit Bindemittel behandelten Schicht ein Härtermittel aufgetragen, durch das das Bindemittel in den ausgewählten Teilbereichen ausgehärtet wird. Das Härtermittel wird beispielsweise mittels eines Drop-on-demand Druckkopfes aufgetragen. Das Härtermittel härtet ohne Anwesenheit des Bindemittels nicht aus, so daß die Düsen des Druckkopfes nicht durch aushärtendes Material verstopft werden. Schicht für Schicht wird ein Schichtenverbund aus mehreren Schichten aufgebaut.

Aus der DE 197 23 892.0 (Höchsmann et al.) ist ein weiteres Rapid-Prototyping-Verfahren bekannt, bei dem zuerst eine Schicht aus einem schüttfähigen, partikelförmigen Baumaterial aus mit einem aushärtbaren Bindemittel vorbeschichteten Partikeln abgelagert wird. Das Baumaterial kann z.B. ein Croning-Sand sein. Auf einem ausgewählten Teilbereich jeder Schicht wird ein Behandlungsmittel aufgetragen, das das Bindemittel der Bindemittelbeschichtung in seiner Aushärtungs-Reaktionsfähigkeit modifiziert. Anschließend wird der Schicht, vor Ablagerung der nächstfolgenden Schicht, Energie mit einem bestimmten Wert an spezifischer Energie zugeführt. Der Wert ist derart auf die durch das Behandlungsmittel veränderte Aushärtungs-Reaktionsfähigkeit des Bindemittels abgestimmt ausgewählt, daß das Bindemittel nur in den mit Behandlungsmittel behandelten Bereichen ausgehärtet wird. Schicht für Schicht wird so ein Schichtenverbund aus mehreren Schichten aufgebaut. Dabei wird jede Schicht vor Ablagerung der nächstfolgenden Schicht ausgehärtet.

Mit der Erfindung wird die Aufgabe gelöst, ein Rapid-Prototyping Verfahren zur Herstellung von Bauteilen, insbesondere Gießformen bzw. Gießkernen zu schaffen, das mit einer kostengünstig durchführbar ist und hohe Fertigungsgeschwindigkeit und gute Fertigungsgenauigkeit miteinander vereint.

Bei dem Verfahren gemäß der Erfindung zum Herstellen eines Bauteils in Ablagerungstechnik durch Aufbauen eines das Bauteil enthaltenden Schichtenverbunds aus einem Partikel vorbestimmter Partikelgröße enthaltendem Partikelmaterial, wird das Partikelmaterial schichtweise unter Ausbildung aufeinanderliegender Schichten in poröser Schüttung abgelagert und wird auf mindestens einen in seiner Gestalt vorbestimmten Teilbereich jeder Schicht, der von Schicht zu Schicht variieren kann, vor dem Ablagern einer nächstfolgenden Schicht ein Behandlungsmittel in fließfähigem Zustand dosiert aufgetragen. Von dem Behandlungsmittel wird ein Bindevorgang vorbereitet, in welchem die Partikel in dem vorbestimmten Teilbereich mittels eines Bindemittels, das in dem Partikelmaterial enthalten ist oder auf das Partikelmaterial aufgetragen wird, in Anwesenheit eines Startermittels fest aneinander gebunden werden.

Gemäß der Erfindung wird das Aufbauen des Schichtenverbunds jedoch in Abwesenheit des Startermittels durchgeführt. Gemäß der Erfindung wird das Startermittel erst nach dem Aufbauen des Schichtenverbunds zugeführt, so daß auch der Abbindevorgang erst nach dem Aufbauen des Schichtenverbundes durchgeführt wird.

Bei den oben beschriebenen bekannten Verfahren werden stets Maßnahmen getroffen, wenigstens eine Teilverfestigung des jeweiligen vorbestimmten Teilbereichs jeder Schicht durch ein Abbinden des Bindemittels unmittelbar nach dem Ablagern der Schicht und vor dem Ablagern der nächstfolgenden Schicht herbeizuführen. Überraschend wurde durch die Erfindung jedoch gefunden, daß selbst eine Teilverfestigung des vorbestimmten Teilbereichs vor dem Ablagern der jeweils nächstfolgenden Schicht unterbleiben kann, wenn dafür gesorgt wird, daß sich das fließfähige Behandlungsmittel nicht oder nicht wesentlich über die seitliche Begrenzung des vorbestimmten Teilbereichs hinaus in das den Teilbereich umgebende unbehandelte Partikelmaterial hinein ausbreitet. Dies kann insbesondere durch eine entsprechende Begrenzung der Dosierung des Behandlungsmittels in Anpassung an das Volumen des vorbestimmten Teilbereichs aus dessen Flächeninhalt und der Schichtdicke sowie an die Partikelgröße und damit die Porosität des Partikelmaterials und an dessen Benetzungsfähigkeit in Abhängigkeit von der Fließfähigkeit des Behandlungsmittels erreicht werden.

Auch gemäß der Erfindung wird das Binden der Partikel des Partikelmaterials in dem vorbestimmten Teilbereich mittels eines Bindemittels erzielt. In einer ersten Verfahrensvariante kann es das Bindemittel sein, das in Form eines fließfähigen Pulvers oder als Flüssigkeit auf den vorbestimmten Teilbereich dosiert aufgetragen wird und daher das Behandlungsmittel darstellt.

In einer anderen Verfahrensvariante kann das Bindemittel auf die abgelagerte Schicht vor oder nach dem Behandlungsmittel vollflächig aufgetragen werden, oder das Bindemittel wird dem Partikelmaterial vor dessen Ablagerung zugemischt oder das Partikelmaterial enthält wenigstens überwiegend mit dem Bindemittel vorbeschichtete Partikel. Bei dieser Verfahrensvariante wird das Behandlungsmittel so ausgewählt, daß es eine für das Abbinden des Bindemittels maßgebliche Eigenschaft des Bindemittels von einem spezifischen Anfangswert oder Anfangswertebereich, der vor dem Auftragen des Behandlungsmittels vorhanden ist, auf einen deutlich anderen Wert oder Wertebereich modifiziert. Diese für das Abbinden maßgebliche spezifische Eigenschaft des Bindemittels wird im folgenden mit dessen Reaktionsfähigkeit bezeichnet. Das Startermedium wird bei dieser zweiten Verfahrensvariante in seiner Reaktionswirksamkeit derart an die Modifizierung der Reaktionsfähigkeit des Bindemittels angepaßt eingestellt, daß entweder das unmodifizierte Bindemittel außerhalb des mit dem Behandlungsmittel behandelten vorbestimmten Teilbereichs oder das mit dem Behandlungsmittel in Kontakt gekommene und daher modifizierte Bindemittel in dem vorbestimmten Teilbereich selektiv reagiert und dadurch abgebunden wird. Das Behandlungsmittel kann daher beispielsweise eine Flüssigkeit wie Salzsäure oder dergleichen sein, von welcher das trockene Bindemittel aufgeweicht oder in seiner Zusammensetzung geändert und dadurch für das Abbinden durch Energieeintrag oder chemische Reaktion aufgeschlossener wird als das unbehandeltete Bindemittel. Beispielsweise kann der Schmelzpunkt bzw. Schmelzbereich durch ein entsprechend ausgewähltes Behandlungsmittel um einen diskreten Betrag herabgesetzt werden, so daß durch Einstellen der Temperatur des abschließend eingetragenen Startermediums auf einen Wert zwischen dem unmodifizierten Schmelzpunkt und dem modifizierten Schmelzpunkt ein selektives Anschmelzen des modifizierten Bindematerials herbeigeführt werden kann. Nach einem anderen Beispiel kann das Behandlungsmittel ein chemisches Katalysatormittel oder ein chemisches Hemmittel sein, durch welches die chemische Reaktionsfähigkeit des modifizierten Bindemittels für eine chemische Abbinde- oder Härterreaktion mit einem chemischen Gas oder einer chemischen Flüssigkeit je nach dessen Konzentration und ggf. Temperatur diskret heraufgesetzt bzw. herabgesetzt wird.

Für diese zweite Verfahrensvariante wird bevorzugt ein Partikelmaterial verwendet, das mit dem Bindemittel bereits vorbeschichtet ist, wie beispielsweise Croningsand. Hierbei liegt das Bindemittel bereits in minimaler Dosierung und als durchgehende Ümhüllung der einzelnen Partikel vor, so daß es für die Dosierung des Behandlungsmittels im wesentlichen nur darauf ankommt, für eine hinreichende Benetzung der umhüllungen an den gegenseitigen Berührungsstellen der Partikel zu sorgen.

Das Startermedium kann ein stoffloses Medium wie Energie in Form von Wärme oder Strahlung sein. Das Startermedium kann auch ein stoffliches Medium wie beispielsweise flüssiges oder insbesondere gasförmiges Wärmeträgermittel oder chemisches Reaktionsmittel sein. Vorzugsweise wird das Bindemittel chemisch gehärtet, so daß als Startermedium ein Wärmemedium oder ein chemisches Härtermittel verwendet wird, durch welches eine Vernetzung des Bindemittels bewirkt wird. Das Startermedium kann auch gleichzeitig als Energiemedium und stoffliches fluides Mittel vorliegen.

Bevorzugt wird das Behandlungsmittel auf das Partikelmaterial, das in poröser Schüttung mit von der Partikelgröße bestimmter Porosität abgelagert wird, derart aufgetragen, daß in dem vorbestimmten Teilbereich eine vorbestimmte Mindestporosität verbleibt, die für eine abschließende Durchflutung des Schichtenverbundes mit einem flüssigen oder gasförmigen Startermittel ausgenutzt werden kann. Eine solche Durchflutung des Schichtenverbundes kann ggf. dadurch vorbereitet und begünstigt werden, daß der Schichtenverbund in einem geschlossenen Behälter vor der Durchflutung evakuiert wird.

### Das Verfahren gemäß der Erfindung hat mehrere Vorteile:

Beim Abbinden und insbesondere beim Aushärten des Bindemittels kann es zu einem Schwund kommen. Wird das thermische Abbinden oder das Aushärten für jede Schicht einzeln durchgeführt, so entstehen Spannungen im Schichtenverbund, die ein Verbiegen oder eine Beschädigung des Bauteils zur Folge haben können. Da bei dem erfindungsgemäßen Verfahren das Abbinden zum Schluß erfolgt und nicht für jede Schicht einzeln, tritt der Schwund volumetrisch auf, das heißt der gesamte Schichtenverbund zieht sich zusammen, so daß er in seinen Außenmaßen kleiner wird, ohne daß dabei Spannungen auftreten. Durch Zugabe eines entsprechenden Schwundmaßes bei der Vorbestimmung der Größe des jeweiligen Teilbereichs, auf den das Behandlungsmittel dosiert aufgetragen wird, kann daher der Schwund kompensiert werden.

Da das Binden und ggf. Aushärten erst nach Herstellung des gesamten Schichtenverbundes durchgeführt wird und nicht nach Ablagerung jeder einzelnen Schicht, entfällt ein Abbindeschritt pro Schicht so daß die Fertigungsdauer pro Schicht verringert ist. Für das Abbinden des Schichtenverbundes ist nur ein einziger Abbindeschritt am Schluß des Verfahrens erforderlich. Dadurch ist die Fertigungsgeschwindigkeit erhöht.

Eine weitere Zeitersparnis bringt das Entfallen von Wartezeiten für jede einzelne Schicht, bis die Schicht abgebunden ist, insbesondere ausgehärtet ist.

Überdies kann das abschließende Abbinden des Schichtenverbunds an einem anderen Ort als das Aufbauen des Schichtenverbunds durchgeführt werden, so daß für das Aufbauen eines zweiten Schichtenverbunds nicht das Härten des ersten Schichtenverbunds abgewartet zu werden braucht. Hierzu wird der Schichtenverbund vorzugsweise in einem Behälter aufgebaut, von dem der Schichtenverbund während und nach dem Aufbauen ohne Auseinanderfallen zusammengehalten wird und in dem der Schichtenverbund zu dem Abbindeort überführt werden kann. Auch während des Abbindens kann der Schichtenverbund in demselben Behälter verbleiben, in dem der Schichtenverbund aufgebaut wurde.

Ein weiterer Vorteil des Verfahrens liegt darin, daß Auftragsvorrichtungen, die zum Auftragen von Bindemittel und Behandlungsmittel verwendet werden, nicht durch aushärtendes Material verstopft werden.

Ein weiter Vorteil des erfindungsgemäßen Verfahrens liegt darin, daß das Baumaterial außerhalb der vorbestimmten Teilbereiche unbehandelt bleiben kann, so daß es nach seiner Entfernung vom verfestigten Rohbauteil leicht wiederverwendet werden kann. Hierbei ist außerdem, wenn ein Baumaterial ohne Beschichtung verwendet wird, die Reinigung der für das Verfahren verwendeten Auftragsvorrichtung erleichtert. Zudem ist das Verfahren kostengünstiger, da das Bindemittel nur an den Stellen aufgetragen wird, an denen später das Bauteil vorliegt.

Als Baumaterial wird vorzugsweise ein für Verfahren zu Herstellung von Gießformen und -kernen und für Ablagerungsverfahren üblicher Sand verwendet, wie zum Beispiel Quarzsand, Silikatsand, Chromitsand, Olivinsand oder Zirkonsand. Es kann jedoch auch ein geeignetes anderes schüttfähiges Partikelmaterial verwendet werden. Es kann auch eine Mischung aus unterschiedlichen Sanden verwendet werden.

Für die oben beschriebene zweite Verfahrensvariante wird bevorzugt ein vorbehandelter Sand verwendet, z.B. ein Croningsand, der bereits mit Bindemittel vorbeschichtet ist.

Unbehandelte Materialien haben den Vorteil, daß sie kostengünstiger sind als bereits mit Bindemittel vorbehandelte Materialien.

Die vorbestimmte Partikelgröße, bei Sand ist dies die Größe der Sandkörner, liegt bevorzugt im Partikelgrößenbereich von 90 bis 200 µm, dabei bevorzugt im Bereich von 110 bis 160 µm. Es ist auch möglich, kleinere oder größere Partikel zu verwenden. Zu kleine Partikel sind jedoch z.B. durch Luftbewegungen sehr leicht beeinflussbar, so daß eine homogene Ablagerung der Partikel erschwert ist. Darüberhinaus reduzieren kleine Partikel die Porosität und beeinflussen damit den Gasstoß beim Gießen. Zu große Partikel hingegen führen zu einer unerwünschten Körnigkeit (der Oberfläche) des fertigen Bauteils. Typischerweise beträgt der mittlere Durchmesser bzw. die mittlere Größe der Partikel ungefähr 140 µm. Typischerweise sind dabei nicht alle Partikel gleich groß, sondern sie folgen einer gewissen Größenverteilung. Bei dem bevorzugt verwendeten Quarzsand mit einer mittleren Körnung (Partikelgröße) von 140 µm sind zum Beispiel in etwa 5% der Körner 180 µm bis 200 µm groß, 59% der Körner 125 µm bis 180 µm groß, 30% der Körner 90 µm bis 125 µm groß und 1% der Körner kleiner als 63 µm. Ein solcher Quarzsand als Baumaterial wird typischerweise in einer Schüttdichte von 1,32 t/m³ abgelagert.

Die Schichtdicke der einzelnen Schichten von Partikelmaterial ist variierbar. Geringere Schichtdicken erlauben es, konstruktive Details des zu erstellenden Bauteils mit höherer Auflösung zu fertigen. Bei sehr geringen Schichtdicken ist durch Verringerung der Schichtdicke allerdings keine Steigerung der Auflösung mehr möglich, da dann Prozeseschwankungen die Auflösung begrenzen. Zu geringe Schichtdicken führen andererseits zu geringen Fertigungsgeschwindigkeiten, da viele Schichtablagerungsschritte erforderlich sind. Höhere Schichtdicken erhöhen die erzielbare Fertigungsgeschwindigkeit, allerdings sind nicht beliebig große Schichtdicken möglich. Zu große Schichtdicken erschweren es, das Behandlungsmittel homogen auf die Schicht aus Partikelmaterial aufzutragen, so daß diese Arbeitsschritte länger dauern und die Fertigungsgeschwindigkeit bei weiterer Erhöhung der Schichtdicke nicht wesentlich erhöht wird oder , sogar wieder abnimmt. Zudem ist bei Verwendung von dickeren Schichten nur eine geringere Auflösung in bezug auf konstruktive Details am zu fertigenden Bauteil erzielbar. Vorzugweise liegt die Schichtdicke im Bereich von 0,15 bis 0,3 mm, da so einerseits eine relativ hohe Fertigungsgeschwindigkeit erreichbar ist, und andererseits eine ausreichende Verbindung zwischen den aufeinanderfolgenden Schichten und eine ausreichende Auflösung in bezug auf Details am Bauteil erzielbar ist.

Die Schichtdicke kann im Verlauf der Fertigung eines Bauteils variiert werden. So kann zum Beispiel in Bereichen des Bauteils, die arm an konstruktiven Details sind, eine größere Schichtdicke gewählt werden, um die Fertigungsgeschwindigkeit zu erhöhen. In Bereichen des Bauteils, die komplizierte und kleine konstruktive Details aufweisen, kann eine geringere Schichtdicke gewählt werden, so daß hier die Auflösung und Fertigungsgenauigkeit erhöht ist.

Das Behandlungsmittel wird auf die zuvor abgelagerte Baumaterialschicht dosiert aufgetragen, so daß das Baumaterial lediglich benetzt wird und verhindert wird, daß sich eine inhomogene Verteilung des Behandlungsmittels mit lokalen Ansammlungen von Behandlungsmittel ausbildet, wodurch die Leistungsfähigkeit eines nach dem Verfahren gebildeten Bauteils verringert wäre.

Das Bindemittel bzw. Behandlungsmittel wird in einer solchen Dosierung aufgetragen, daß in der Partikelschicht eine Restporosität verbleibt, so daß beim nachfolgenden Aushärten das Härtermittel das Bauteil durch die verbleibenden Restporen hindurch durchdringen kann.

Die vorbestimmte Dosierung des Bindemittels ist bevorzugt so gewählt, daß das Gewichtsverhältnis von Bindemittel zu Baumaterial unter 6 Prozent, und dabei bevorzugt im Bereich von 2 bis 3 Prozent liegt. Die relativ zur Baumaterialmenge aufgetragene Menge an Bindemittel kann von Schicht zu Schicht unterschiedlich sein.

Für das Behandlungsmittel wird bevorzugt ein vergleichbares Gewichtsverhältnis von Behandlungsmittel zu Baumaterial gewählt.

Ist das Bauteil eine Gießform oder ein Gießkern, so bewirkt die nach dem Aushärten verbleibende Restporosität des verfestigten Bauteils weiter, daß bei einem späteren Gießprozeß sich bildende Gase entweichen können. Die Dosierung des Bindemittels bzw. Behandlungsmittels ist in diesem Fall weiter vorzugsweise so gewählt, daß bei der Verwendung der Gießform oder des Gießkerns zur Herstellung eines Gußkörpers aus einer Schmelze einerseits die Gießform oder der Gießkern dem Druck der Schmelze standhält, solange diese noch nicht formstabil ist, und andererseits zu dem Zeitpunkt, zu dem die Schmelze so weit teilweise erstarrt ist, daß der Gußkörper im wesentlichen formstabil ist, das Bindemittel bzw. das Bindemittel und das Behandlungsmittel mindestens größtenteils verdampft ist bzw. sind. Die Gießform kann dann, nachdem der Gußkörper erstarrt ist, einfach zerstört werden, so daß der Gußkörper der Gießform ohne großen Aufwand entnommen werden kann (Lostformverfahren).

Das Bindemittel bzw. das Behandlungsmittel kann in flüssiger Form aufgetragen werden.

Das flüssige Bindemittel bzw. Behandlungsmittel kann dabei z.B. in Form eines Strahls auf die Partikelschicht aufgetragen werden. Vorzugsweise wird das flüssige Bindemittel bzw. Behandlungsmittel jedoch in Form flüssiger Bindertröpfchen vorbestimmten Tröpfchendurchmessers aufgetragen. Der vorbestimmte Tröpfchendurchmesser der Bindertröpfchen bzw. Behandlungsmitteltröpfchen liegt dabei vorzugsweise im Tröpfchendurchmesserbereich von 50 bis 100 µm. Bei Tröpfchen, deren Durchmesser kleiner als ungefähr 5 µm groß ist, sind Reibungskräfte in der Luft gegenüber der Schwerkraft nicht mehr vernachlässigbar, wodurch es schwierig ist, die Tröpfchen zuverlässig auf der Baumaterialschicht abzulagern. Große Tropfen dagegen bewirken eine inhomogene Verteilung der Flüssigkeit in der Baumaterialschicht.

Das Bindemittel bzw. Behandlungsmittel sollte in diesem Fall hinreichend dünnflüssig sein, daß es sich in vorbestimmter Dosierung auf die Baumaterialschicht auftragen lässt und sich durch die in den Hohlräumen zwischen den Partikeln wirkenden Kapillarkräfte in der Partikelschicht verteilt, so daß die Partikel benetzt werden. Das flüssige Bindemittel bzw. Behandlungsmittel hat daher bei seinem Auftragen vorzugsweise eine Viskosität im Viskositätsbereich von 1 bis 25 mPas hat. Zudem kann der Binder eine Farbsubstanz, insbesondere Farbpigmente enthalten oder anderweitig eine gezielte Verfärbung der Pulverschüttung bewirken, so daß auch farbige Modelle hergestellt werden können. Bei Verwendung von mehreren unterschiedlich farbigen Bindern, die jeweils gesondert dosiert werden, können durch Farbmischung ähnlich wie in der Tintenstrahltechnik vollfarbige Modelle, auch mit unterschiedlichen Farbmustern, entstehen, was für die Anwendung zur Herstellung von Anschauungsmustern interessant ist, um möglichst naturgetreue Nachbildungen zu erhalten.

Die Temperatur, bei der das Verfahren durchgeführt wird, ist durch Materialeigenschaften, wie zum Beispiel Viskosität und Schmelztemperatur, der als Baumaterial und Bindemittel bzw. Behandlungsmittel verwendeten Materialien vorbestimmt. Bevorzugt wird das Verfahren bei einer Temperatur im Temperaturbereich von 10 bis 40 °C durchgeführt. Weiter bevorzugt wird ein Bindemittel bzw. Behandlungsmittel verwendet, das eine Durchführung des Verfahrens bei Raumtemperatur erlaubt, da so der apparative Aufwand nicht unnötig erhöht wird. Daher liegt die Viskosität des Bindemittels bzw. Behandlungsmittels bevorzugt bei einer Temperatur von 20 °C im genannten Bereich von 1 bis 25 mPas.

Das Bindemittel bzw. Behandlungsmittel kann bei seinem Auftragen Umgebungstemperatur haben oder alternativ gegenüber der Umgebungstemperatur leicht erwärmt sein, damit seine Viskosität abgesenkt ist und das Verteilen des Bindemittels bzw. Behandlungsmittels in der Schicht erleichtert ist. Als Umgebungstemperatur ist die Temperatur zu verstehen, die in der näheren Umgebung des Ortes herrscht, an dem das Bauteil hergestellt wird, z.B. die Temperatur der in der näheren Umgebung herrschenden Atmosphäre.

Alternativ kann zur Förderung des Verteilens des Bindemittels bzw. Behandlungsmittels in der Schicht die Schicht jeweils erwärmt werden, bevor das Bindemittel bzw. Behandlungsmittel aufgetragen wird.

Alternativ zur flüssigen Form kann das Bindemittel bzw. Behandlungsmittel in Form eines feinen Pulvers mit Bindemittel- bzw. Behandlungsmittel-Partikeln vorbestimmter Partikelgröße aufgetragen werden. Die Partikelgröße der Bindemittel- bzw. Behandlungsmittel-Partikel sollte dabei kleiner sein als die Partikelgröße der Baumaterial-Partikel, damit die Baumaterial-Partikel von den Bindemittel- bzw. Behandlungsmittel-Partikeln benetzt oder umhüllt werden können. Ein Auftragen feiner pulverförmiger Materialien wird zum Beispiel bei Kopierern erfolgreich verwendet, wo ein Toner in Pulverform auf Papier aufgetragen wird, oder bei Sublimationsdruckern, wo pulverförmige Farbstoffe auf Papier aufgetragen werden. Bei Kopierern wird der Toner durch Hitze fixiert, jedoch haftet bereits der nur aufgetragene und nicht fixierte Toner auf dem Papier.

Das flüssige oder pulverförmige Bindemittel bzw. Behandlungsmittel kann z.B. mittels einer sogenannten Airless-Technik aufgetragen werden, bei der das reine Bindemittel bzw. Behandlungsmittel unter Hochdruck durch eine Düse gepreßt wird. Alternativ kann das Bindemittel bzw. Behandlungsmittel mittels einer Airbrush-Technik aufgetragen werden, bei der das Bindemittel bzw. Behandlungsmittel an einen Dorn geführt wird, wo es von einem an dem Dorn vorbeigeführten schnellen Luftstrom mitgerissen wird, oder alternativ mittels einer Rotationstechnik. Alternativ kann das Behandlungsmittel durch Ultraschallzerstäuber aufgetragen werden, indem das Behandlungsmittel mittels einer piezoangeregten Membran Tröpfchen bildet und mittels eines Luftstroms zielgerecht auf dem Baufeld, d.i. den vorbestimmten Teilbereich, abgelegt werden kann. Mittels der genannten Techniken ist das Bindemittel bzw. Behandlungsmittel sehr fein dosierbar. Das Bindemittel bzw. Behandlungsmittel kann alternativ mittels einer Siebdrucktechnik aufgetragen werden oder mittels einer Technik, bei der das Bindemittel bzw. Behandlungsmittel durch eine Maske hindurch aufgespritzt wird. Pulverförmiges Bindemittel bzw. Behandlungsmittel kann alternativ aufgestreut werden.

Bevorzugt wird zum Auftragen des flüssigen oder pulverförmigen Bindemittels bzw. Behandlungsmittels ein Drop-on-Demand Druckkopf, zum Beispiel mit Bubble-Jet- oder Piezo-Technik verwendet, zum Beispiel ein Druckkopf wie er zum Beispiel aus Tintenstrahldruckern bekannt ist.

Bei Verwendung eines flüssigen Bindemittels bzw. Behandlungsmittels wird das Bindemittel bzw. Behandlungsmittel mit dem Drop-on-Demand Druckkopf bevorzugt mit einer Tröpfchenliniendichte im Bereich von 300 bis 600 dpi aufgetragen wird.

Als Bindemittel bzw. Behandlungsmittel wird bevorzugt zumindest ein Material aus der Materialgruppe, die Natriumsilicat, Phenolharz, Polyisocyanat, Polyurethan, Epoxidharz, Furanharz, Polyurethanpolymer, Peroxid, Polyphenolharz und Resol-Ester und aufweist, verwendet.

Als Härtermittel kann ein Gas oder eine Flüssigkeit oder ein Flüssigkeitsdampf verwendet werden.

Das fluide Härtermittel wird, nachdem alle Schichten des zu fertigenden Bauteils abgelagert und mit Bindemittel bzw. Behandlungsmittel versetzt worden sind, durch das Bauteil hindurch geflutet. Dabei durchdringt das Härtermittel das Bauteil durch die Restporen hindurch, die nach dem Auftragen des Bindemittel bzw. Behandlungsmittels verblieben sind. Dadurch wird das Bindemittel bzw. das mit Behandlungsmittel behandelte Bindemittel von dem Härtermittel ausgehärtet.

Die Aushärtung kann dabei durch Erhitzen des Fluids und/oder des gesamten Bauteils beschleunigt werden. Bei Verwendung eines Dampfes zum Aushärten kann, falls eine heißer Dampf verwendet ist, die Hitze des Dampfes die Aushärtung unterstützen und/oder beschleunigen.

Bevorzugt wird als Härtermittel zumindest ein Gas aus der Gruppe von Gasen, die Kohlendioxid, Dimethylethyamin, Triethylamin, Schwefeldioxid, Methylformiat, Formaldehyddimethylacetat und Isocyanat aufweist, verwendet.

Das Bindemittel und das Härtermittel werden dabei so geeignet gewählt, daß sie eine Materialkombination bilden, bei der das Bindemittel durch das Härtermittel aushärtbar ist.

In der folgenden Tabelle werden einige an sich bekannte Gashärteverfahren mit ihren Binde- und Härtemittel-Kombinationen genannt, die auch gemäß der Erfindung anwendbar sind:

**Tabelle 1:**

| Verfahren | Bindemittel | Härtermittel |
|---|---|---|
| CO₂ | Natriumsilicat | Kohlendioxid |
| Cold-Box-Polyurethan | Phenolharz und Polyisocyanat | Dimethylethylamin oder Triethylamin |
| Cold-Box-Plus | Polyurethan | Dimethylethylamin |
| SO₂ | Furanharz und Peroxid | Schwefeldioxid |
| FRC | Polyurethanpolymer und Peroxid | Schwefeldioxid |
| Pep-Set | Polyphenolharz und eine Säure | Methylformiat |

Das Cold-Box-Plus Verfahren wird üblicherweise bei einer leicht erhöhten Temperatur von 65 bis 70 °C durchgeführt.

Jedoch sind auch weitere Materialkombinationen möglich. Bei Verwendung von Isocyanat als Bindemittel kann als Härtermittel Wasserdampf verwendet werden.

Das Verfahren gemäß der Erfindung eignet sich zum Herstellen von unterschiedlichen Bauteilen, zum Beispiel von Design- oder Konstruktionsmodellen. Bevorzugt ist die Anwendung des Verfahrens zur Herstellung einer Gießform oder eines Gießkerns, dabei bevorzugt einer Gießform.

Im folgenden wird eine bevorzugte Ausführungsform der Erfindung anhand der Zeichnung beschrieben. In der Zeichnung zeigen:
Figur 1a eine schematische Darstellung eines nach einer bevorzugten Ausführungsform des erfindungsgemäßen Verfahrens hergestellten Bauteils im Querschnitt beim Auftragen des Bindemittel bzw. Behandlungsmittels; und
Figur 1b das Bauteil aus Figur 1a in fertigem Zustand.
Figur 2 eine Vorrichtung zum Durchführen des erfindungsgemäßen Verfahrens, während der Dosierkopf arbeitet.

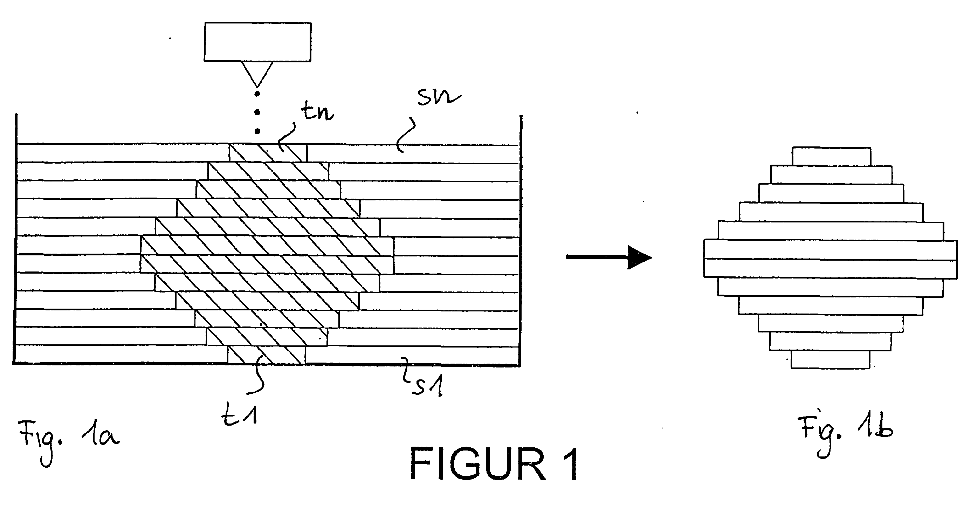

Figur 1a zeigt eine schematische Darstellung eines nach einer bevorzugten Ausführungsform des erfindungsgemäßen Verfahrens hergestellten Bauteils, z.B. eines Gießkerns oder eines Modells, im Querschnitt beim Auftragen des Bindemittels, woraus das Prinzip des Verfahrens ersichtlich ist. Gemäß dem Verfahren werden zum Herstellen eines Bauteils nacheinander n Schichten s1 bis sn hergestellt. Dazu wird zunächst in einem ersten Schritt eine vollflächige erste Baumaterialschicht s1 aufgetragen. Danach wird in einem zweiten Schritt die Schicht in einem ausgewählten Teilbereich t1 (schraffiert) der ersten Schicht s1 das Bindemittel bzw. das Behandlungsmittel aufgetragen. Diese beiden Schritte werden nacheinander auch für die übrigen Schichten s2 bis sn durchgeführt. Die Teilbereiche ti, tj für unterschiedliche Schichten si, sj sind dabei im allgemeinen unterschiedlich, überlappen sich aber zumindest teilweise, so daß sie fest miteinander verbunden werden.

Nachdem das Bindemittel bzw. das Behandlungsmittel auf die letzte Schicht sn aufgetragen worden ist, wird das gesamte Bauteil mit dem Härtermittel geflutet und dadurch ausgehärtet. Unterstützend kann der Schichtenverbund vor der Durchflutung mit Härtermittel evakuiert werden. Anschließend wird das nicht verfestigte Baumaterial außerhalb der Bereiche t1 bis tn entfernt, so daß das in Figur 1b gezeigte fertige Bauteil verbleibt.

Zur Herstellung einer Gießform nach dem erfindungsgemäßen Verfahren wird das Baumaterial wie oben beschrieben aufgetragen. Das Bindemittel bzw. das Behandlungsmittel wird dagegen jeweils im Bereich außerhalb des Teilbereichs ti, i=1...n, aufgetragen. Dadurch werden beim anschließenden Härten diese Bereiche außerhalb ti verfestigt. Nach dem Aushärten des Bauteils wird das nicht verfestigte Partikelmaterial in den Teilbereichen ti, i=1...n, entfernt, so daß ein Bauteil mit einem Hohlraum in Form des in Figur 1b dargestellten Körpers verbleibt.

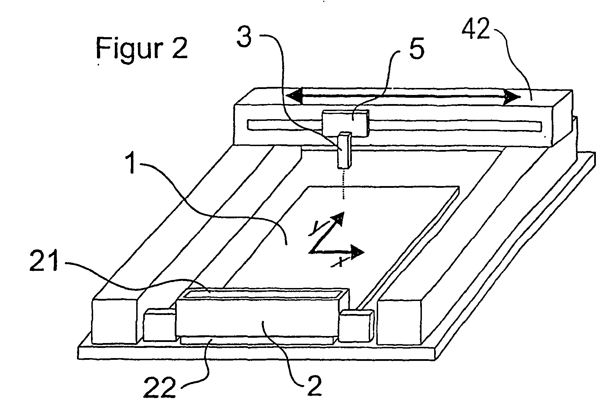

Eine Vorrichtung zum Herstellen von Bauteilen gemäß einer bevorzugten Ausführungsform der Erfindung ist in Figur 2 gezeigt. Eine solche Vorrichtung weist folgende Komponenten auf:
eine vertikal verschiebbare Bauunterlage 1,
eine Steuerung,
eine mittels der Steuerung steuerbare, horizontal verfahrbare Auftragsvorrichtung 2, von der ein schüttfähiges Baumaterial schichtenweise auf der Bauunterlage 1 oder einer vorangehenden Schicht zu einer Schicht vorbestimmter Schichtdicke ablagerbar ist, und
ein mittels der Steuerung steuerbares, an einem Schlitten 42 angeordnetes, horizontal verfahrbares Dosiergerät 3, von dem ein flüssiges oder pulverförmiges Bindemittel bzw.

Behandlungsmittel auf ausgewählte Bereiche der Schicht auftragbar ist.

Die Auftragsvorrichtung 2 für Baumaterial weist einen länglichen Kasten 21 auf, der unten und oben offen ist und zur Aufnahme von Baumaterial und zum Auftragen des Baumaterials auf die Bauunterlage 1 bzw. die zuletzt aufgetragene Baumaterialschicht gestaltet ist. In der Nähe des unteren, der Bauunterlage 1 zugewandten offenen Randes des Kastens 21 ist eine im Öffnungsgrad bis zum Verschließen einstellbare Auslassvorrichtung 22 mit Streichklingen vorgesehen. Die Auftragsvorrichtung 2 ist senkrecht zur Längsrichtung des Kasten 21 von einem Ende der Bauunterlage und zurück mit einstellbarer Geschwindigkeit verfahrbar.

Der Schlitten 42 mit dem Dosiergerät 3 zum Auftragen des Bindemittels ist in gleicher Weise verfahrbar wie die Auftragsvorrichtung 2 für das Baumaterial. Das Dosiergerät 3 ist senkrecht zur Verfahrrichtung des Schlittens 42 verfahrbar, so daß das Dosiergerät insgesamt in der gesamten Ebene über der Bauunterlage verfahrbar ist.

Das Verfahren wird mittels der Vorrichtung gemäß der bevorzugten Ausführungsform der Erfindung folgendermaßen durchgeführt.

### Ablagern der Baumaterialschicht:

Zu Beginn des Verfahrens ist die Auftragsvorrichtung 2 mit dem mit Baumaterial befüllten Kasten 21 z.B., wie in Figur 2 gezeigt ist, am ersten Rand der Bauunterlage 1 positioniert. Die Auslassvorrichtung 22 ist geschlossen. Die Auslassvorrichtung 22 des Kastens 21 wird geöffnet, so daß auf der Bauunterlage ein Streifen von Baumaterial abgelagert wird. Gleichzeitig wird die Auftragsvorrichtung 2 mit gleichförmiger Geschwindigkeit bis zum gegenüberliegenden Rand der Bauunterlage verfahren, so daß die gesamte Bauunterlage 1 mit einer gleichförmigen Schicht von Baumaterial bedeckt wird. Der Kasten 21 wird dabei derart über die Bauunterlage 1 bewegt, daß die bereits aufgetragene Baumaterialschicht vom unteren Rand des Kastens 21 glattgestrichen wird. Die vertikale Position der Bauunterlage bezüglich des Kastens 21 wird dabei so eingestellt, daß die Baumaterialschicht nach dem Glattstreichen mittels der Streichklinge am unteren Rand des Kastens 21 eine vorbestimmte gewünschte Schichtdicke aufweist. Die Verfahrgeschwindigkeit und/oder der Öffnungsgrad der Verschlussvorrichtung 22 sind/ist dabei vorzugsweise so gewählt und mittels der Steuerung eingestellt, daß genau die für die vorbestimmte Schichtdicke erforderliche Menge von Baumaterial auf die Bauunterlage 1 gelangt. Sobald die Auftragsvorrichtung 2 am gegenuberliegenden Rand der Bauunterlage angekommen ist, wird die Zufuhr an Baumaterial unterbrochen.

### Auftragen des Bindemittels bzw. Behandlungsmittels:

Die Dosiervorrichtung 3, vorzugweise ein Drop-on-Demand Dosierkopf, wie er aus Tintenstrahldruckern bekannt ist, wird durch Bewegung des Schlittens 42 bezüglich der Bauunterlage 3 und durch Bewegung des Dosierkopfes 3 bezüglich des Schlittens 42 in einem vorbestimmen Muster über der Bauunterlage 1 verfahren. Zugleich wird von dem Dosierkopf 3 Bindemittel bzw. Behandlungsmittel ausgestoßen. Dadurch wird ein Muster aus Bindemittel bzw. Behandlungsmittel in der Baumaterialschicht erzeugt, das dem Querschnitt des Bauteils in der Ebene der Schicht entspricht.

Nun ist die erste Schicht vollendet, und eine zweite Schicht wird erzeugt. Dazu wird zuerst die Bauunterlage 1 um eine diskrete Strecke von der Auftragsvorrichtung 2 weg nach unten verfahren. Anschließend wird die zweite Schicht von Baumaterial abgelagert und mit einem Muster aus Bindemittel bzw. Behandlungsmittel versehen.

Auf die gleiche Weise werden weitere Schichten erzeugt, so daß der Schichtenverbund ausgebildet wird.

Schließlich wird der Schichtenverbund ausgehärtet. Die Aushärtung wird bevorzugt analog einem herkömmlichen Gashärtungsverfahren durchgeführt.

Zum Beispiel wird nach Ablagerung der letzten Schicht und Auftragen des Bindemittels auf die letzte Schicht der Schichtenverbund aus der Auftragsvorrichtung entfernt. Die Bauunterlage kann dabei zusammen mit dem Schichtenverbund entfernt werden und dem Schichtenverbund als Stütze dienen. Der Schichtenverbund wird, ggf. mitsamt der Bauunterlage, in eine Prozeßkammer gegeben. Die Prozeßkammer wird zum Aushärten des Schichtenverbunds mit einem geeigneten Gas geflutet.

Alternativ ist die Vorrichtung zum Herstellen eines Bauteils in eine Prozeßkammer integriert, so daß der Schichtenverbund direkt in der Vorrichtung ausgehärtet werden kann.

Die einzelnen Schichten des Schichtenverbundes haben bereits vor dem Aushärten einen ausreichenden Zusammenhalt untereinander, so daß der unausgehärtete Schichtenverbund gefahrlos aus der Auftragsvorrichtung entfernt werden kann.

Die Vorrichtung kann jedoch auch einen Baukasten aufweisen, in dem die Schichten des Schichtenverbundes so hergestellt werden, daß anschließend der Baukasten durch die Schichten ausgefüllt ist. Der Baukasten dient als Stütze für den Schichtenverbund und verringert die Gefahr, daß der unausgehärtete Schichtenverbund vor dem Aushärten, z.B. beim Transfer des Schichtenverbunds in eine Prozeßkammer zu seinem Aushärten, beschädigt wird.

## Patentansprüche

1. Verfahren zum Herstellen eines Bauteils in Ablagerungstechnik durch Aufbauen eines das Bauteil enthaltenden Schichtenverbunds aus einem Partikel vorbestimmter Partikelgröße enthaltendem Partikelmaterial, indem das Partikelmaterial schichtweise unter Ausbildung aufeinanderliegender Schichten in poröser Schüttung abgelagert wird und auf einen vorbestimmten Teilbereich jeder Schicht, der von Schicht zu Schicht variieren kann, vor dem Ablagern einer nächstfolgenden Schicht ein Behandlungsmittel in fließfähigem Zustand dosiert aufgetragen wird, von dem ein Abbindevorgang vorbereitet wird, in welchem die Partikel mittels eines Bindemittels, das in dem Partikelmaterial enthalten ist oder auf das Partikelmaterial aufgetragen wird, in Anwesenheit eines Startermittels fest aneinander gebunden werden, **dadurch gekennzeichnet, dass** das Aufbauen des Schichtenverbunds in Abwesenheit des Startermittels durchgeführt wird und der Abbindevorgang erst nach dem Aufbauen des Schichtenverbunds durch Zuführen des Startermittels herbeigeführt wird.

2. Verfahren nach Anspruch 1, wobei als Behandlungsmittel ein Bindemittel in Form eines fließfähigen Pulvers oder einer Flüssigkeit verwendet wird.

3. Verfahren nach Anspruch 1, **dadurch gekennzeichnet, dass** ein Partikelmaterial abgelagert wird, dessen Partikel mit dem Bindemittel vorbeschichtet sind, und als Behandlungsmittel ein Modifiziermittel in Form eines fließfähigen Pulvers oder einer Flüssigkeit verwendet wird, von dem die Abbinde-Reaktionsfähigkeit des Bindemittels um einen vorbestimmten Modifizierungsbereich modifiziert wird, auf den die Wirksamkeit des Startermediums selektiv eingestellt wird, wobei die Modifizierung durch Heraufsetzen der Reaktionsfähigkeit erfolgt, so dass das Abbinden des Bindemittels in dem vorbestimmten Teilbereich stattfindet, oder die Modifizierung durch Herabsetzen der Reaktionsfähigkeit erfolgt, so dass das Abbinden des Bindemittels außerhalb des vorbestimmten Teilbereichs stattfindet.

4. Verfahren nach einem der Ansprüche 1 bis 3, wobei als Startermedium ein stoffliches Reaktionsmedium in Form eines fluiden Wärmeträgermittels und/oder chemischen Härtermittels, mit dem der aufgebautete Schichtenverbund durchflutet oder durchströmt wird, und/oder ein Strahlungsmedium verwendet wird.

5. Verfahren nach Anspruch 2 oder 3, wobei das Behandlungsmittel in Form von flüssigen Tropfen im Tintenstrahlverfahren oder Drop-on-Demand-Verfahren aufgetragen wird.

6. Verfahren nach einem der Ansprüche 1 bis 5, wobei jede Schicht vor dem Auftragen des Behandlungsmittels zur Förderung von dessen Verteilung in dem Partikelmaterial des vorbestimmten Teilbereichs erwärmt wird.

7. Verfahren nach einem der Ansprüche 1 bis 6, wobei als Bindemittel im Falle der Ansprüche 1 und 3, oder als Behandlungsmittel im Falle des Anspruchs 2 zumindest ein Material aus der Gruppe, die Natriumsilicat, Phenolharz, Polyisocyanat, Polyurethan, Epoxidharz, Furanharz, Polyurethanpolymer, Peroxid, Polyphenolharz und Resol-Ester aufweist, verwendet wird.

8. Verfahren nach einem der Ansprüche 4 bis 7, wobei als Härtermittel zumindest ein Gas aus der Gruppe verwendet wird, die Kohlendioxid, Dimethylethylamin, Triethylamin, Schwefeldioxid, Methylformiat, Formaldehyddimethylacetat und Isocyanat aufweist.

9. Verfahren nach einem der Ansprüche 4 bis 7, wobei als Härtermittel eine Flüssigkeit verwendet wird.

10. Verfahren nach einem der Ansprüche 4 bis 7, wobei als Härtermittel ein Flüssigkeitsdampf verwendet wird.

11. Verfahren nach einem der Ansprüche 1 bis 10, wobei ein eine Farbsubstanz, insbesondere Farbpigmente enthaltendes Behandlungsmittel für wenigstens eine der Schichten verwendet wird.

12. Verfahren nach einem der Ansprüche 1 bis 11, wobei in den vorbestimmten Teilbereich wenigstens einer der Schichten Farbsubstanzen, insbesondere Farbpigmente unterschiedlicher Farbe selektiv aufgetragen werden.

13. Verwendung des Verfahrens nach einem der Ansprüche 1 bis 12 zur Herstellung einer Gießform oder eines Gießkerns

## Claims

1. A method of forming a component part using deposition technique by building a layered composite containing said component part from particulate matter comprising particles of a predefined particle size, wherein the particulate matter is deposited layer by layer, thereby forming successive layers of a porous bulk, and on a predefined subarea of each layer, which subarea can vary from layer to layer, and prior to depositing a subsequent layer, a treatment agent being in a state capable of flowing, is applied in a dosed manner, by which a bonding process is prepared, in which the particles are firmly bond to one another through a binder comprised either in the particulate matter or applied on the particulate matter, in the presence of an initiator, **characterized in that** building the layered composite is carried out in the absence of an initiator and that the bonding process is brought about only after building the layered composite by adding the initiator.

2. The method of claim 1, wherein a binder in the form of a powder, capable of flowing, or a liquid is used as a treatment agent.

3. The method of claim 1, **characterized in that** a particulate matter is deposited, the particles of which are precoated with the binder, and a modifier in the form of a powder, capable of flowing, or a liquid is used as a treatment agent, by which the bonding reactivity of the binder is modified by a predefined modification range, to which the effectiveness of the initiator medium is selectively adjusted, wherein modifying occurs upon increasing the reactivity, such that bonding of the binder occurs within the predefined modification range, or modification occurs upon reducing the reactivity, such that bonding of the binder occurs outside the predefined modification range.

4. The method of any of claims 1 to 3, wherein a material reaction medium in the form of a fluid heat transfer agent and/or a chemical curing agent is used as the initiator medium, with which the layered composite built is flooded or subjected to a flow through, and/or a radiation medium is used.

5. The method of claims 2 or 3, wherein the treatment agent is applied in the form of liquid drops in an inkjet or a Drop-on-Demand method.

6. The method of any of claims 1 to 5, wherein each layer is heated prior to application of the treatment agent to promote its distribution into the particulate matter of the predefined subarea.

7. The method of any of claims 1 - 6, wherein at least one material of the group comprising sodium silicate, phenol resin, polyisocyanate, polyurethane, epoxy resin, furan resin, polyurethane polymer, peroxide, polyphenol resin and resol ester is used as the binder in the case of claims 1 and 3 or as the treatment agent in case of claim 2.

8. The method of any of claims 4 to 7, wherein at least one gas of the group comprising carbon dioxide, dimethylethylamine, triethylamine, sulphur dioxide, methyl-formiate, formaldehyde dimethylacetate and isocyanate is used as the curing agent.

9. The method of any of claims 4 to 7, wherein a fluid is used as the curing agent.

10. The method of any of claims 4 to 7, wherein a liquid vapour is used as the curing agent.

11. The method of any of claims 1 to 10, wherein a treatment agent containing a colour substance, especially colour pigments, is used on at least one of the layers.

12. The method of any of claims 1 to 11, wherein colour substances, especially colour pigments of different colours, are applied selectively in the predefined subareas of at least one of the layers.

13. The use of the method of any of claims 1 to 12 in the manufacture of a casting mould or a core.

## Revendications

1. Procédé de réalisation d'une pièce selon la technique de dépôt, par la constitution d'un assemblage de couches contenant la pièce et réalisé dans un matériau particulaire contenant des particules avec une grosseur prédéterminée, dans lequel le matériau particulaire est déposé par couches moyennant la formation de couches superposées dans un empilement poreux, et, avant le dépôt d'une couche suivante, il est appliqué sous forme dosée sur une zone partielle prédéterminée de chaque couche, laquelle peut varier d'une couche à l'autre, un produit de traitement à l'état fluide, qui prépare un processus de durcissement, dans lequel les particules, dans la zone partielle prédéterminée, sont fermement liées les unes aux autres en présence d'un agent déclencheur, au moyen d'un liant qui est contenu dans le matériau particulaire ou est déposé sur le matériau particulaire, **caractérisé en ce que** la constitution de l'assemblage de couches est effectuée en l'absence d'agent déclencheur et le processus de durcissement est mis en oeuvre seulement après la constitution de l'assemblage de couches par l'admission de l'agent déclencheur.

2. Procédé selon la revendication 1, dans lequel le produit de traitement utilisé est un liant sous la forme d'une poudre coulante ou d'un liquide.

3. Procédé selon la revendication 1, **caractérisé en ce qu'**il est déposé un matériau particulaire, dont les particules sont recouvertes au préalable d'un liant, et le produit de traitement utilisé est un agent modifiant sous la forme d'une poudre coulante ou d'un liquide, lequel modifie la réactivité au durcissement du liant selon un domaine de modification prédéterminé, en fonction duquel est réglée de manière sélective l'efficacité de l'agent déclencheur, la modification se produisant par l'élévation de la réactivité, de telle sorte que le durcissement du liant se produit dans la zone partielle prédéterminée, ou la modification se produisant par la diminution de la réactivité, de telle sorte que le durcissement du liant se produit en dehors de la zone partielle prédéterminée.

4. Procédé selon l'une quelconque des revendications 1 à 3, **caractérisé en ce que** l'agent déclencheur utilisé est un réactif matériel sous la forme d'un caloporteur fluide et/ou d'un durcissant chimique, qui traverse ou circule à travers l'assemblage de couches constitué, et/ou un agent de rayonnement.

5. Procédé selon la revendication 2 ou 3, dans lequel le produit de traitement est appliqué sous forme de gouttes liquides dans un processus à jet d'encre ou un processus à jet d'encre contrôlé.

6. Procédé selon l'une quelconque des revendications 1 à 5, dans lequel chaque couche, avant l'application du produit de traitement, est chauffée en vue de favoriser la répartition du produit de traitement dans le matériau particulaire de la zone partielle prédéterminée.

7. Procédé selon l'une quelconque des revendications 1 à 6, dans lequel pour le liant dans le cas des revendications 1 et 3, ou pour le produit de traitement dans le cas de la revendication 2, on utilise au moins un matériau issu du groupe contenant le silicate de sodium, la résine phénolique, le polyisocyanate, le polyuréthanne, la résine époxy, la résine furanique, le polymère de polyuréthanne, le peroxyde, la résine polyphénolique et l'ester de résol.

8. Procédé selon l'une quelconque des revendications 4 à 7, dans lequel le durcissant utilisé est au moins un gaz issu du groupe contenant le dioxyde de carbone, le diméthyléthylamine, le triéthylamine, le dioxyde de soufre, le méthylformiate, le formaldéhyde diméthylacétate et l'isocyanate.

9. Procédé selon l'une quelconque des revendications 4 à 7, dans lequel le durcissant utilisé est un liquide.

10. Procédé selon l'une quelconque des revendications 4 à 7, dans lequel le durcissant utilisé est une vapeur de liquide.

11. Procédé selon l'une quelconque des revendications 1 à 10, dans lequel une substance colorée, en particulier un produit de traitement contenant des pigments colorés, est utilisée pour au moins une des couches.

12. Procédé selon l'une quelconque des revendications 1 à 11, dans lequel des substances colorées, en particulier des pigments de différentes couleurs, sont déposées de manière sélective dans les zones partielles prédéfinies d'au moins une de couches.

13. Utilisation du procédé selon l'une quelconque des revendications 1 à 12 pour la réalisation d'un moule de coulée ou d'un noyau de coulée.
